# EUROPÄISCHE PATENTSCHRIFT

(11) **EP 1 533 603 B1**
(45) Veröffentlichungstag und Bekanntmachung des Hinweises auf die Patenterteilung: **21.01.2009**
(21) Anmeldenummer: 04027395.5
(22) Anmeldetag: 18.11.2004
(51) Int. Cl.: G01M 3/26, G01M 3/02

(54) **Vakuummessbehälter**
Vacuum measuring vessel
Récipient à vide pour mesurer

(30) Priorität: 20.11.2003 DE 10354301
(43) Veröffentlichungstag der Anmeldung: 25.05.2005
(73) Patentinhaber: Eaton Fluid Power GmbH, 76532 Baden-Baden (DE)
(72) Erfinder: Welle, Stefan, 76549 Hügelsheim (DE); Ullrich, Holger, 76477 Elchesheim-Illingen (DE); Leisenheimer, Bert, Dr., 76689 Karlsdorf-Neuthard (DE)
(74) Vertreter: Rüger, Barthelt & Abel Patentanwälte

(56) Entgegenhaltungen:
- EP-A- 0 267 798
- EP-A- 0 477 640
- US-A- 2 888 331
- US-A- 4 584 877
- US-A- 5 375 456

## Beschreibung

Die Erfindung betrifft einen Vakuummessbehälter nebst zugehöriger Anschlusseinrichtungen zum Messen von Leckagen, insbesondere CO₂-Leckagen, an Prüflingen.

In Wärmepumpen, Kältemaschinen oder sonstigen technischen Systemen wird als Wärmeträger oder Kältemittel wegen umwelttechnischer Vorteile gegenüber anderen Kältemitteln zunehmend CO₂ eingesetzt, das in der betreffenden Anlage dann unter hohem Druck steht. Es wird angestrebt, solche Anlagen möglichst wartungsfrei zu gestalten. Dies gilt insbesondere für die Anwendung in Kraftfahrzeugen. CO₂-betriebene Klimaanlagen sollen möglichst wenigstens zehn Jahre lang ohne merklichen Leistungsverlust betrieben werden können. Entsprechend gering müssen die an den Komponenten der Klimaanlage vorhandenen Leckraten sein. Die Entwicklung von Anlagenkomponenten mit geringsten Leckraten erfordert auch, dass diese Leckraten im Test gemessen werden können. Die Messung stößt allerdings auf enorme Schwierigkeiten: CO₂-Leckagen können nicht ohne Weiteres mit Markergasen, wie beispielsweise Helium, erkannt werden. Dies gilt insbesondere bei der Messung sehr geringer Leckraten. Diese kommen zum Teil durch Diffusion zu Stande, im Rahmen derer CO₂ durch Elastomerkörper, beispielsweise von Dichtungen oder Schläuchen, hindurch diffundiert. An der Druckseite löst sich CO₂ in dem Elastomer während es an der Niederdruckseite ausgast. Dieser Prozess läuft für CO₂ und Helium oder andere Markergase grundsätzlich unterschiedlich ab, so dass eine Heliumdotierung des CO₂ und eine Messung der Heliumkonzentration außerhalb des geschlossenen Systems nicht zu verlässlichen Aussagen über die CO₂-Dichtigkeit führt. Die direkte CO₂-Messung hingegen stößt auf noch größere Schwierigkeiten, denn CO₂ ist praktisch allgegenwärtig. Die Messung der Leckraten soll bis zu Lecks von 0,5 g/Jahr verlässlich sein. Die an einem entsprechenden Leck austretenden CO₂-Mengen sind somit derart gering, dass sie durch das in der Atmosphäre vorhandene CO₂ um viele Größenordnungen überdeckt werden. Dennoch kommt man nicht umhin, bei der Entwicklung CO₂-dichter Komponenten auf Experimente und Messungen zurück zu greifen.

Das Dokument US-A-4584877 beschreibt einen Vakuummeßbehälter, der zwei Gehäuseteile, die abgedichtet lösbar miteinander verbunden sind, aufweist.

Es ist deshalb Aufgabe der Erfindung, einen Weg zu weisen, mit dem geringste Lecks an CO₂-führenden Komponenten erfasst werden können.

Diese Aufgabe wird erfindungsgemäß dadurch gelöst, dass die betreffende, hier als Prüfling bezeichnete, Systemkomponente gegen die äußere Atmosphäre abgeschirmt in einem Vakuummessbehälter angeordnet wird, der die betreffende Messstelle umschließt. Der Vakuummessbehälter weist zwei Gehäuseteile auf, die zu einem geschlossenen Gehäuse zusammengesetzt werden können, in dessen Innenraum der Prüfling dann platziert ist. An den Gehäuseteilen sind Gehäusedurchführungen vorgesehen, durch die Zuleitungen des Prüflings abgedichtet hindurchgeführt werden können, um an das CO₂-führende System angeschlossen zu werden. Zum Anschluss dienen äußere Adapter, die einen einfachen und dabei relativ dichten Anschluss ermöglichen. Genau genommen gehören diese äußeren Adapter zu dem Vakuummessbehälter dazu, ohne mit diesem eine Baueinheit zu bilden. Sie bilden gewissermaßen einen zusammengehörigen Satz. Sie sind jedoch gesondert ausgebildet und weisen keine bauliche Verbindung zu dem Vakuummessbehälter auf. Dadurch wird CO₂, das an kleineren Lecks der äußeren Adapter austritt, in die Atmosphäre abgeleitet ohne die Messung zu stören. Es kann jedenfalls nicht in den Innenraum des Vakuummessbehälters gelangen. Mit diesem können verschiedene CO₂-führende Prüflinge, wie beispielsweise Kupplungen, Schläuche, Trockner oder sonstige Aggregate auf CO₂-Leckage geprüft werden. Der Vakuummessbehälter weist einen oder mehrere Messstutzen auf, über die er zunächst mit einem Spülgas versorgt und dann unter einen definierten niedrigen Druck, beispielsweise 10⁻³ mbar gesetzt werden kann. Zur Messung des durch das Prüflingsleck-verursachten CO₂-Eintrags in den Innenraum des Vakuummessbehälters kann an diesen beispielsweise über ein entsprechendes Druckhalteventil ein bei noch niedrigerem Druck arbeitendes Massenspektrometer angeschlossen werden.

Der Behälter selbst weist zwei Gehäusedurchführungen auf, die vorzugsweise koaxial zueinander angeordnet sind. Der Behälter kann beispielsweise ein zylindrischer, mit angerundeten Endkappen versehener Behälter sein, der mittig, d.h. an seinem Äquator eine Trennfuge aufweist, an der die entsprechenden Gehäuseteile abgedichtet aneinandergefügt sind. Die an den Gehäuseteilen vorgesehenen Gehäusedurchführungen bestehen vorzugsweise aus einem fest mit dem jeweiligen Gehäuseteil verbundenen Flansch und einem auswechselbaren Adapter. An dem Flansch und dem auswechselbaren Adapter vorgesehene Ringflächen dienen als Dichtungsflächen, zwischen denen ein ringförmiges Dichtungselement angeordnet werden kann. Die Anpassung an unterschiedliche Prüflinge geschieht einfach durch Verwendung unterschiedlicher Adapter. Dem ringförmigen Dichtungselement ist vorzugsweise ein Stützring zugeordnet, der sowohl den Adapter zu dem Flansch zentriert als auch das Zusammendrücken des Dichtungselements auf ein gewünschtes Maß begrenzt. Die Radialflansche können dann mit einfachsten Mitteln, beispielsweise Klemmschellen, aneinander befestigt werden.

Ein derart aufgebauter Vakuummessbehälter ist relativ flexibel. Er gestattet die Messung an verschiedensten Systemkomponenten von CO₂-führenden Systemen. Aufgrund seiner mittigen Zweiteilung und seiner großzügig bemessenen Flansche, an denen Adapter für den Prüfling angeordnet werden, ist der Vakuummessbehälter weitgehend unspezifisch. Er ermöglicht die Abschirmung der äußeren CO₂-haltigen Atmosphäre von der Messstelle und somit sehr empfindliche Messungen.

Weitere Einzelheiten vorteilhafter Ausführungsformen der Erfindung sind der Zeichnung, der Beschreibung oder Ansprüchen zu entnehmen. In der Zeichnung ist ein Ausführungsbeispiel der Erfindung veranschaulicht. Es zeigen:
- Figur 1: den Vakuummessbehälter in geschlossener Perspektivdarstellung,
- Figur 2: den Vakuummessbehälter nach Figur 1 in längs geschnittener Darstellung,
- Figur 3: eine Gehäusedurchführung des Vakuummessbehälters nach Figur 1 und 2 in Schnittdarstellung und
- Figur 4: einen äußeren Adapter des Vakuummessbehälters nach den Figuren 1 und 2 in längs geschnittener Darstellung.

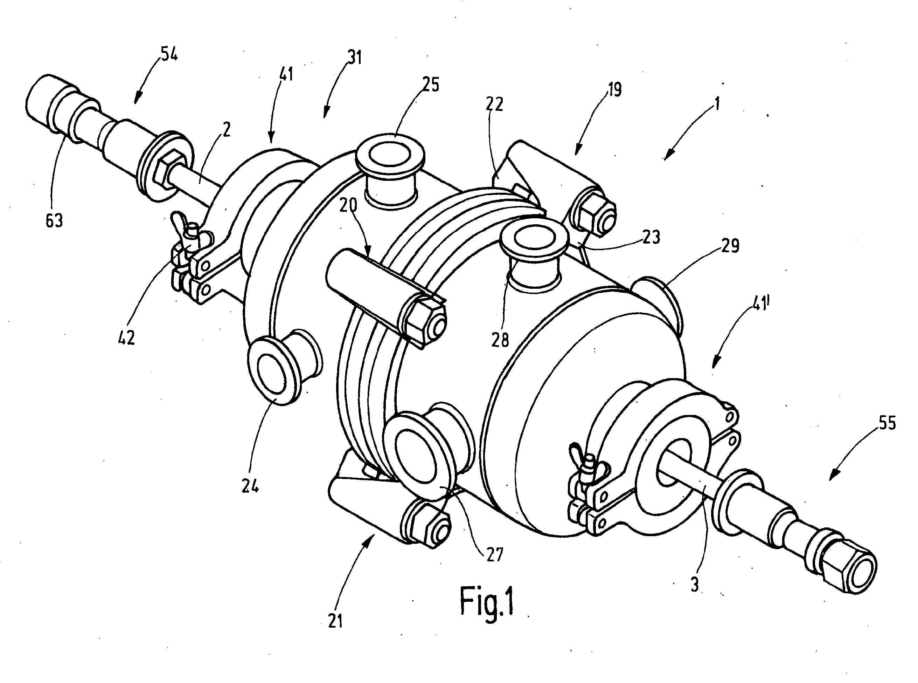

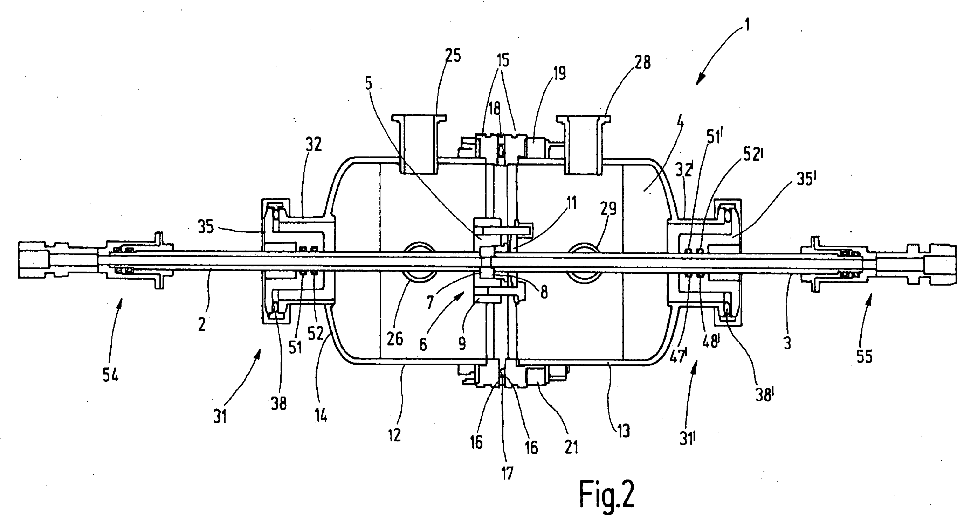

In Figur 1 ist ein Vakuummessbehälter 1 veranschaulicht, aus dem Zuleitungen 2, 3 eines aus Figur 2 ersichtlichen, in dem Innenraum 4 des Vakuummessbehälters 1 angeordneten Prüflings 5 ragen. Der Prüfling 5 ist z.B. eine Fluidkupplung 6, durch die die beiden Zuleitungen 2, 3 untereinander verbunden sind. Die Fluidkupplung 6 ist in Figur 2 lediglich schematisch und weitgehend symbolisch veranschaulicht. Sie besteht aus an den Enden der Zuleitung 2, 3 angeordneten oder ausgebildeten Flanschen 7, 8, die durch Axialdruck zusammengehalten werden. Der Axialdruck wird durch einen äußeren, die Flansche 7, 8 in einer Stufenbohrung aufnehmenden Kupplungskörper 9 und einen Spannbügel 11 gebildet, der die Flasche 7, 8 über ein Druckstück zusammenpresst und durch Bolzen an dem Kupplungskörper 9 gehalten ist.

Der Vakuummessbehälter 1 weist ein erstes Gehäuseteil 12 und ein zweites Gehäuseteil 13 auf, die vorzugsweise spiegelsymmetrisch zueinander und untereinander gleich ausgebildet sind. Die Beschreibung des Gehäuseteils 12 gilt deshalb unter Zugrundelegung gleicher Bezugszeichen entsprechend für die Beschreibung des Gehäuseteils 13 und der mit ihm verbundenen Komponenten.

Der Gehäuseteil 12 ist im Wesentlichen hohlzylindrisch ausgebildet und an einem Ende durch einen gewölbten Boden 14 abgeschlossen. An der dem jeweils anderen Gehäuseteil zugewandten Seite ist das Gehäuseteil 12 mit einem Flansch 15 versehen, der stirnseitig eine ringförmige Planfläche 16 aufweist. Zwischen den Flanschen 15 der beiden Gehäuseteile 12, 13 ist ein ringförmiges Dichtungselement 17 angeordnet. Dieses weist vorzugsweise einen kreisförmigen Querschnitt auf und ist elastisch nachgiebig. Konzentrisch zu dem Dichtungselement 17, das an den Planflächen 16 anliegt, ist ein Außenring 18 angeordnet, der sich mit entsprechenden ringförmigen Planflächen an den Planflächen 16 abstützt und dadurch die maximale Kompression des Dichtungselements 17 begrenzt. Aus Figur 1 ersichtliche Spannpratzen 19, 20, 21 sind um den Außenumfang der Flansche 15 herum angeordnet und spannen diese gegeneinander. Jede Spannpratze 19, 20, 21 weist zwei parallel zueinander verstellbare Spannfinger 22, 23 auf, die den Flansch 15 außen umgreifen und mittels einer Spannschraube gegeneinander zu spannen sind.

Des Weiteren ist jeder Gehäuseteil 12, 13 mit Stutzen 24, 25, 26, 27, 28, 29 versehen, die als Pump- oder Messstutzen dienen können und mit der Messapparatur verbunden oder, falls kein Bedarf besteht, auch einfach dicht abgeschlossen werden.

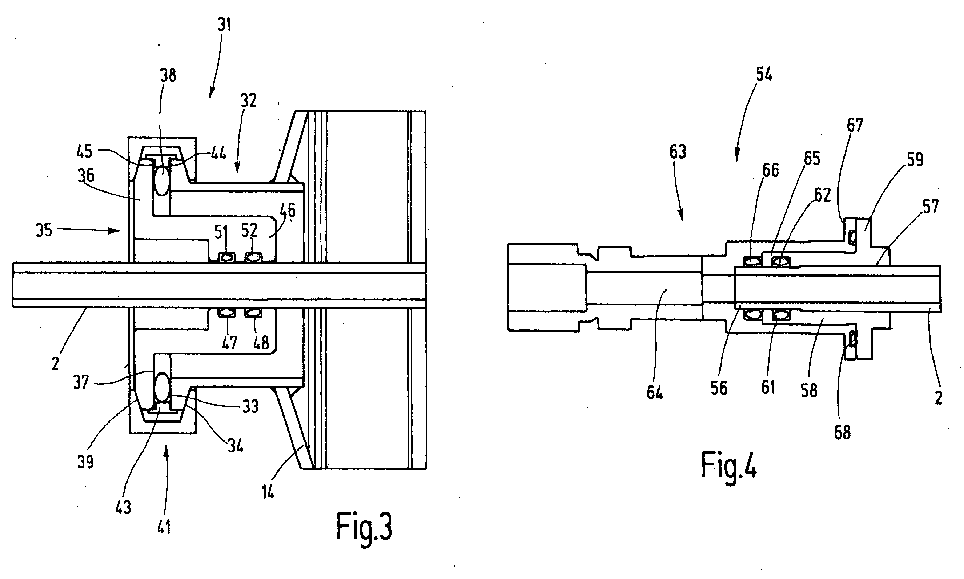

Das Gehäuseteil 12 ist an seinem Boden 14 mit einer Gehäusedurchführung 31 versehen, durch die sich die Zuleitung 2 erstreckt. Zu der Gehäusedurchführung 31 gehört ein koaxial zu dem Gehäuseteil 12 angeordneter, nach Art eines Stutzens ausgebildeter Flansch 32, der, wie insbesondere Figur 3 erkennen lässt, an seinem stirnseitigen Ende eine plane Ringfläche 33 aufweist. An seiner von der Ringfläche 33 abgewandten Seite ist der sich in Radialrichtung erstreckende Abschnitt des Flanschs 32 vorzugsweise mit einer Konusfläche 34 versehen. Im Übrigen ist der Flansch 32 mit dem Boden 14 stoffschlüssig verbunden, beispielsweise verschweißt oder verlötet.

Zu der Gehäusedurchführung 31 gehört des Weiteren ein Adapter 35, der etwa rohrförmig angebildet und an einem Ende mit einem Radialflansch 36 versehen ist. Dieser weist an seiner dem Flansch 32 zugewandten Seite eine plane Ringfläche 37 auf, die ein ringförmiges Dichtungselement 38 gegen die Ringfläche 33 presst. Das Dichtungselement 38 ist beispielsweise eine Elastomerdichtung in Form eines O-Rings, d.h. eines Gummirings mit Kreisquerschnitt. Dieser ist konzentrisch zu dem Flansch 32 wie auch zu dem Adapter 36 angeordnet. Der Adapter 36 weist an seiner der Ringfläche 37 gegenüber liegenden Seite eine Konusfläche 39 auf, an der, wie an der Konusfläche 34, eine Spanneinrichtung 41 angreift. Diese ist nach Art einer Manschette ausgebildet und beispielsweise aus Figur 1 ersichtlich. Sie besteht aus zwei über ein Scharnier miteinander verbundenen Hälften, die innen eine sich radial nach außen verjüngende Nut aufweisen. Durch eine Spannschraube 42 können die Hälften der Spanneinrichtung zusammengezogen und dadurch durch Keilwirkung der Adapter 35 an dem Flansch 32 festgespannt werden.

Die zweite Gehäusedurchführung ist baugleich mit der ersten Gehäusedurchführung 31 und ist deshalb in Figur 2 mit gleichen, zur Unterscheidung lediglich mit einem Apostroph markierten, Bezugszeichen versehen.

Konzentrisch zu dem Dichtungselement 38 ist ein Stützring 43 vorgesehen, der zueinander parallele, ringförmige Anlageflächen 44, 45 aufweist, die sich an den Ringflächen 33, 37 abstützen. Außen übergreift der Stützring 43 die Ränder des Flanschs 32 und des Radialflanschs 37. Er weist insgesamt somit einen etwa T-förmigen Querschnitt auf und dient zur Zentrierung des Adapters 35.

Der Adapter 35 weist des Weiteren einen etwa rohrförmigen, nach innen gerichteten Fortsatz 46 auf, der eine Stufenbohrung umgibt. Innerhalb des den geringeren Durchmesser aufweisenden Abschnitts der Stufenbohrung sind zwei Ringnute 47, 48 ausgebildet, in denen O-Ringe 51, 52 oder anderweitige Dichtungselemente sitzen. Diese dichten an der äußeren Mantelfläche der sich mit geringem Spiel durch die Stufenbohrung erstreckende Zuleitung 2 ab. Die O-Ringe 51, 52 sind in Radialrichtung komprimiert. So tolerieren sie kleinere Taumelbewegungen der Zuleitung 2 oder Fluchtungsfehler derselben ohne dass Undichtheiten entstehen. Erst diese Maßnahme ermöglicht die sichere Abschottung des Prüflings gegen die Umgebung unter praktischen Prüfbedingungen.

Figur 4 veranschaulicht einen an die Zuleitung 2 angeschlossenen äußeren Adapter 54, der mit dem an die Zuleitung 3 angeschlossenen äußeren Adapter 55 (Figur 1) übereinstimmt und wie dieser zum Anschluss des Prüflings 5 an ein äußeres CO₂-führendes System dient. Die nachfolgende Beschreibung des äußeren Adapters 54 anhand Figur 4 gilt entsprechend für den Adapter 55. Die äußeren Adapter 54, 55 sind von den Adaptern 36, 36' beabstandet angeordnet und nur von den Leitungen 2, 3 getragen. Die Verbindung zu dem Vakuummessbehälter besteht somit ausschließlich über die Leitungen 2, 3.

Das Ende der Zuleitung 2 ist abgestuft ausgebildet. Unmittelbar an die Stirnfläche der Zuleitung 2 anschließend ist ein erster Dichtungsabschnitt 56 mit zylindrischer Mantelfläche ausgebildet. An diesen schließt sich ein mit Außengewinde versehener Abschnitt 57 an. Auf dieses ist eine Muffe 458 aufgeschraubt, die im Wesentlichen rohrförmig ausgebildet ist und an ihrem von dem Dichtungsabschnitt 56 abliegenden Ende mit einem Radialflansch 59 versehen ist. An ihrem entgegen gesetzten Ende ist sie innen mit einer Ringnut 61 versehen, in der ein O-Ring 62 oder ein anderweitiges Dichtungselement zur Abdichtung der Muffe 58 gegen die Außenfläche der Zuleitung 2 angeordnet ist.

Zu dem äußeren Adapter 54 gehört außerdem ein Koppelstück 63, das einen Durchgangskanal 64 umschließt. Dieser ist Teil einer abgestuften Durchgangsbohrung, deren Durchmesser größerer Abschnitt 65 die Muffe 58 wenigstens bis zu ihrem Radialflansch 59 sowie ein weiteres Dichtungselement, beispielsweise in Form eines O-Rings 66, aufnimmt. Dieser stützt sich zum einen an der Stirnseite der Muffe 58 zum anderen an der gegenüber liegenden Stufenfläche der Stufenbohrung sowie an der Innenumfangsfläche der Stufenbohrung und an der Außenumfangsfläche des Abschnitts 56 ab. Endseitig ist das Koppelstück 63 mit einem Radialflansch 67 versehen, in dem sich in Axialrichtung öffnende Ringnut mit einem ringförmigen Dichtungselement, z.B. einem O-Ring 68 vorgesehen ist. Die Radialflansche 59, 67 werden durch ein nicht weiter veranschaulichtes Spannmittel axial gegeneinander gespannt.

Der insoweit beschriebene Vakuummessbehälter 1 arbeitet wie folgt:

Soll der Prüfling 5 hinsichtlich seiner Leckage vermessen werden, werden zunächst die Enden der Zuleitungen 2, 3 mit den entsprechenden Flächen und Gewinden versehen. Sodann wird die Fluidkupplung 6 zusammengebaut und der Prüfling 5 wird mit seinen Zuleitungen 2, 3 durch die vollkommen offenen Flansche 32 der noch nicht miteinander verbundenen Gehäuseteile 12, 13 gesteckt. Zuvor wurden das Dichtungselement 17 und der Außenring 18 über den Prüfling 5 geführt. Es können nun die Gehäuseteile 12, 13 aneinander gefügt und die Spannpratzen 19, 20, 21 angesetzt sowie festgezogen werden. Im nächsten Schritt können, falls dies nicht bereits geschehen ist, die Dichtungselemente 38, die Stützringe 43 und die Adapter 35 auf die Zuleitungen 2, 3 aufgeschoben werden, wobei die Adapter 35 bis in die Flansche 32 hinein geschoben werden. Liegen an beiden Flanschen 32 die entsprechenden Dichtungselemente 38 und an diesen die Radialflansche 36 an, kann jeweils die Spanneinrichtung 41 aufgesetzt und fest gezogen werden. Der Prüfling 5 wird dadurch nicht nur nach außen hin abgedichtet sondern auch mechanisch gelagert.

Im nächsten Schritt werden die äußeren Adapter 54, 55 angebracht. Dazu wird auf das jeweilige Ende der Zuleitung 2 bzw. 3 die Muffe 58 aufgeschraubt. Sodann wird lediglich noch das Koppelstück 63 angesetzt, indem dieses über die Muffe 58 geschoben wird, bis der Radialflansch 67 nahezu an dem Radialflansch 59 anliegt. Sodann werden beide Flansche gegeneinander gespannt. Die Montage ist somit beendet. Es können nun die Stutzen 24 bis 29 an die Messeinrichtung und die Koppelstücke 63 an die entsprechende CO₂-führende Anlage angeschlossen werden und die Messung kann durchgeführt werden.

Die an dem Vakuumbehälter 1 vorhandenen Dichtungselemente sind sowohl an der Gehäusetrennfuge als auch an den Adaptern 31 als auch an den äußeren Adaptern 54, 55 jeweils nach außen abgeschirmt. Die Abschirmung wird jeweils durch äußere Ringe oder, zumindest im Falle der Adapter 54, 55, durch mit engem Spalt aneinander liegende Teile des betreffenden Adapters bewirkt. Beispielsweise ist der O-Ring 68 an keiner Stelle großflächig der äußeren Atmosphäre ausgesetzt. Gleiches gilt für den O-Ring 66 und den O-Ring 62. Dies ergibt geringe CO₂-Diffusionswerte. Um solche CO₂-Diffusionen hinsichtlich der Messung auch an der eigentlichen Messkammer, nämlich dem Vakuumbehälter 1 abzuschirmen, liegen sowohl der Außenring 18 als auch die beiden Stützringe 43 der Adapter 31 mit ihren Anlageflächen 44, 45 unter Vorspannung an den entsprechenden Ringflächen der Flansche 32, 36 an. Dies ergibt eine mechanisch einfache und dabei eine gute Diffusionsdichtigkeit versprechende Dichtungsanordnung.

Zur Vermessung von CO₂-Leckagen an Prüflingen 5 ist ein Vakuumbehälter 1 vorgesehen, der an zwei gegenüber liegenden Enden mit Gehäusedurchführungen 31 versehen ist, durch die Zuleitungen 2, 3 des Prüflings 5 nach außen geführt werden können. An den Gehäusedurchführungen sind Adapter 35 angeordnet, die eine Anpassung der Durchführungen 31 an unterschiedliche Prüflinge ermöglichen. Zu der Messeinrichtung gehören außerdem äußere Adapter 54, 55 zum Anschluss des Prüflings an ein CO₂-führendes System.

## Patentansprüche

1. Vakuummessbehälter (1), zur Messung von insbesondere CO₂-Leckagen an Prüflingen (5),
mit einem ersten Gehäuseteil (12) und mit einem zweiten Gehäuseteil (13), die an einer Trennfuge gegeneinander abgedichtet lösbar miteinander verbunden sind,
mit einer ersten Gehäusedurchführung (31), die einen Adapter (35) mit einer Dichtungseinrichtung (51, 52, 38) für den Prüfling aufweist,
mit einer zweiten Gehäusedurchführung (31'), die einen Adapter (35') mit einer Dichtungseinrichtung (51', 52', 38') für den Prüfling (5, 2, 3) aufweist,
mit einem äußeren Adapter (54) zum Anschluss eines Endes des Prüflings (5) an ein Fluidsystem und
mit einem weiteren äußeren Adapter (55) zum Anschluss eines anderen Endes des Prüflings (5) an das Fluidsystem.

2. Vakuummessbehälter nach Anspruch 1, **dadurch gekennzeichnet, dass** die beiden Gehäusedurchführungen (31, 31') einander gegenüberliegend, vorzugsweise koaxial zueinander angeordnet sind.

3. Vakuummessbehälter nach Anspruch 1, **dadurch gekennzeichnet, dass** die erste Gehäusedurchführung (31) an dem ersten Gehäuseteil (12) und die zweite Gehäusedurchführung (31') an dem zweiten Gehäuseteil (13) ausgebildet ist.

4. Vakuummessbehälter nach Anspruch 1, **dadurch gekennzeichnet, dass** die Gehäusedurchführung (31, 31') einen mit dem Gehäuseteil (12, 13) fest verbundenen Flansch (32, 32') und einen auswechselbaren Adapter (35, 35') umfasst, der an den Flansch (32, 32') angesetzt und lösbar mit diesem verbunden ist und der eine an den Prüfling (5, 2, 3) angepasste Dichtung (51, 52) trägt.

5. Vakuummessbehälter nach Anspruch 4, **dadurch gekennzeichnet, dass** der Adapter (35, 35') eine Durchgangsbohrung aufweist, deren Durchmesser nur geringfügig größer ist als der Außendurchmesser einer zu dem Prüfling (5, 2, 3) gehörigen Zuleitung (2, 3).

6. Vakuummessbehälter nach Anspruch 5, **dadurch gekennzeichnet, dass** die Durchgangsbohrung wenigstens eine Ringnut (47, 48, 47', 48') zur Aufnahme eines Dichtungselements (51, 52, 51', 52') zu Abdichtung gegen die Zuleitung (2, 3) aufweist.

7. Vakuummessbehälter nach Anspruch 4, **dadurch gekennzeichnet, dass** der Flansch (32) und der Adapter (35) jeweils eine vorzugsweise plane Ringfläche (33, 37) aufweisen, zwischen denen ein Dichtungselement (38) abdichtend festklemmbar ist,

8. Vakuummessbehälter nach Anspruch 7, **dadurch gekennzeichnet, dass** das Dichtungselement (38) ein elastisch verformbarer Dichtungsring ist, dem ein konzentrische zu dem Dichtungsring angeordneter vorzugsweise steifer äußerer Stützring (43) zugeordnet ist, der ringförmige Anlageflächen (44, 45) für die Ringflächen (33, 37) aufweist.

9. Vakuummessbehälter nach Anspruch 7, **dadurch gekennzeichnet, dass** das Dichtungselement (38) einen Kreisquerschnitt aufweist.

10. Vakuummessbehälter nach Anspruch 8, **dadurch gekennzeichnet, dass** der steife äußere Stützring (43) einen T-Querschnitt aufweist.

11. Vakuummessbehälter nach Anspruch 4, **dadurch gekennzeichnet, dass** zu der Gehäusedurchführung (31) eine Spanneinrichtung (41) gehört, mit der der Adapter (35) gegen den Flansch (32) spannbar ist.

12. Vakuummessbehälter nach Anspruch 1, **dadurch gekennzeichnet, dass** zu dem äußeren Adapter (54) eine Muffe (58) gehört, die axial unverschiebbar auf einem Ende einer durch die Gehäusedurchführung (31) ragenden Zuleitung (2) des Prüflings (5) gesichert ist und die eine Dichtung (62) zur Abdichtung gegen die Zuleitung (2) trägt.

13. Vakuummessbehälter nach Anspruch 12, **dadurch gekennzeichnet, dass** die Muffe (58-) eine Schraubmuffe ist.

14. Vakuummessbehälter nach Anspruch 12, **dadurch gekennzeichnet, dass** die Muffe (58) in der Wandung ihrer Durchgangsbohrung eine Ringnut (61) zur Aufnahme eines Dichtungselementes (62) aufweist.

15. Vakuummessbehälter nach Anspruch 12, **dadurch gekennzeichnet, dass** die Muffe (58) einen Radialflansch (59) trägt.

16. Vakuummessbehälter nach Anspruch 12, **dadurch gekennzeichnet, dass** zu dem äußeren Adapter (54) ein Koppelstück (63) gehört, das eine abgestufte Durchgangsbohrung aufweist, die als Durchgangskanal (64) dient und die Muffe (58) aufnimmt.

17. Vakuummessbehälter nach Anspruch 16, **dadurch gekennzeichnet, dass** in der Durchgangsbohrung ein mit der Außenseite der Zuleitung (2) zusammenwirkendes Dichtungselement (66) angeordnet ist.

18. Vakuummessbehälter nach Anspruch 16, **dadurch gekennzeichnet, dass** das Koppelstück (63) mit einem Radialflansch (67) versehen ist und dass zwischen dem Radialflansch (67) des Koppelstücks (63) und dem Radialflansch (59) der Muffe (58) ein Dichtungsring (68) angeordnet ist.

## Claims

1. Vacuum measuring vessel (1) for measuring CO₂ leaks on test items (5) in particular,
with a first housing part (12) and with a second housing part (13), which are detachably connected to one another to be sealed relative to one another at a parting line,
with a first housing opening (31), which has an adapter (35) with a sealing means (51, 52, 38) for the test item,
with a second housing opening (31'), which has an adapter (35') with a sealing means (51', 52', 38') for the test item (5, 2, 3),
with an external adapter (54) for connection of one end of the test item (5) to a fluid system and
with a further external adapter (55) for connection of another end of the test item (5) to the fluid system.

2. Vacuum measuring vessel according to claim 1, **characterised in that** the two housing openings (31,31') are arranged opposite one another, preferably coaxially to one another.

3. Vacuum measuring vessel according to claim 1, **characterised in that** the first housing opening (31) is configured on the first housing part (12) and the second housing opening (31') is configured on the second housing part (13).

4. Vacuum measuring vessel according to claim 1, **characterised in that** the housing opening (31, 31') comprises a flange (32, 32') fixedly connected to the housing part (12, 13) and a replaceable adapter (35, 35'), which is attached to the flange (32, 32') and is detachably connected to this and which bears a seal (51, 52) adapted to the test item (5, 2, 3).

5. Vacuum measuring vessel according to claim 4, **characterised in that** the adapter (35, 35') has a through-bore, the diameter of which is only slightly larger than the outside diameter of a feed line (2, 3) belonging to the test item (5, 2, 3).

6. Vacuum measuring vessel according to claim 5, **characterised in that** the through-bore has at least one annular groove (47, 48, 47', 48') to receive a sealing element (51, 52, 51', 52') to seal against the feed line (2, 3).

7. Vacuum measuring vessel according to claim 4, **characterised in that** the flange (32) and the adapter (35) respectively have a preferably plane ring surface (33, 37), between which a sealing element (38) can be firmly clamped to form a seal.

8. Vacuum measuring vessel according to claim 7, **characterised in that** the sealing element (38) is an elastically deformable sealing ring, which has an associated, preferably rigid, outer support ring (43), which is arranged concentrically to the sealing ring and has annular abutment surfaces (44, 45) for the ring surfaces (33, 37).

9. Vacuum measuring vessel according to claim 7, **characterised in that** the sealing element (38) has a circular cross-section.

10. Vacuum measuring vessel according to claim 8, **characterised in that** the rigid outer support ring (43) has a T-shaped cross-section.

11. Vacuum measuring vessel according to claim 4, **characterised in that** the housing opening (31) includes a clamping means (41), with which the adapter (35) can be clamped against the flange (32).

12. Vacuum measuring vessel according to claim 1, **characterised in that** the outer adapter (54) includes a sleeve (58), which is secured to be axially non-displaceable on an end of a feed line (2) of the test item (5) projecting through the housing opening (31) and which bears a seal (62) to seal against the feed line (2).

13. Vacuum measuring vessel according to claim 12, **characterised in that** the sleeve (58) is a sleeve nut.

14. Vacuum measuring vessel according to claim 12, **characterised in that** in the wall of its through-bore the sleeve (58) has an annular groove (61) to receive a sealing element (62).

15. Vacuum measuring vessel according to claim 12, **characterised in that** the sleeve (58) bears a radial flange (59).

16. Vacuum measuring vessel according to claim 12, **characterised in that** the external adapter (54) includes a connection piece (63), which has a stepped through-bore, which serves as a through-duct (64) and receives the sleeve (58).

17. Vacuum measuring vessel according to claim 16, **characterised in that** a sealing element (66) cooperating with the outer surface of the feed line (2) is arranged in the through-bore.

18. Vacuum measuring vessel according to claim 16, **characterised in that** the connection piece (63) is provided with a radial flange (67), and that a sealing ring (68) is arranged between the radial flange (67) of the connection piece (63) and the radial flange (59) of the sleeve (58).

## Revendications

1. Récipient à vide pour mesurer (1), pour la mesure en particulier de fuites de CO₂ sur des échantillons (5),
avec une première partie de boîtier (12) et avec une deuxième partie de boîtier (13), reliées ensemble de façon désolidarisable et étanche en étant placées l'une contre l'autre sur un joint de séparation,
avec un premier passage de boîtier (31), présentant un adaptateur (35) avec un dispositif d'étanchéité (51, 52, 38) pour l'échantillon,
avec un deuxième passage de boîtier (31'), présentant un adaptateur (35') avec un dispositif d'étanchéité (51', 52', 38') pour l'échantillon (5, 2, 3),
avec un adaptateur extérieur (55) supplémentaire, pour le raccordement d'une autre extrémité de l'échantillon (5) au système de fluide.

2. Récipient à vide pour mesurer selon la revendication 1, **caractérisé en ce que** les deux passages de boîtier (31, 31') sont disposés à l'opposé l'un de l'autre, de préférence coaxialement l'un à l'autre.

3. Récipient à vide pour mesurer selon la revendication 1, **caractérisé en ce que** le premier passage de boîtier (31) est réalisé sur la première partie de boîtier (12) et le deuxième passage de boîtier (31') est réalisé sur la deuxième partie de boîtier (13).

4. Récipient à vide pour mesurer selon la revendication 1, **caractérisé en ce que** le passage de boîtier (31, 31') comprend une bride (32, 32') reliée rigidement à la partie de boîtier (12, 13), et un adaptateur (35, 35') remplaçable, appliqué sur la bride (32, 32') et relié de façon désolidarisable à celle-ci, et portant un joint d'étanchéité (51, 52) adapté à l'échantillon (5, 2, 3).

5. Récipient à vide pour mesurer selon la revendication 4, **caractérisé en ce que** l'adaptateur (35, 35') présente un perçage traversant, dont le diamètre n'est que légèrement plus grand que le diamètre extérieur d'une conduite d'alimentation (2, 3) appartenant à l'échantillon (5, 2, 3) .

6. Récipient à vide pour mesurer selon la revendication 5,' **caractérisé en ce que** le perçage traversant présente au moins une gorge annulaire (47, 48, 47', 48') pour recevoir un élément d'étanchéité (51, 52, 51', 52'), pour isoler de façon étanche par rapport à la conduite d'alimentation (2, 3).

7. Récipient à vide pour mesurer selon la revendication 4, **caractérisé en ce que** la bride (32) et l'adaptateur (35) présentent chacun une face annulaire (33, 67), de préférence plane, faces entre lesquelles un élément d'étanchéité (38) est susceptible d'être bloqué par serrage, avec effet d'étanchéité.

8. Récipient à vide pour mesurer selon la revendication 7, **caractérisé en ce que** l'élément d'étanchéité (38) est une bague d'étanchéité déformable élastiquement, à laquelle est associée une bague de soutien extérieure (43), de préférence plus rigide, disposée concentriquement par rapport à la bague d'étanchéité, qui présente des faces d'appui (44, 45) à forme annulaire pour les faces annulaires (33, 37).

9. Récipient à vide pour mesurer selon la revendication 7, **caractérisé en ce que** l'élément d'étanchéité (38) présente une section transversale circulaire.

10. Récipient à vide pour mesurer selon la revendication 8, **caractérisé en ce que** la bague de soutien extérieure (43) rigide présente une section transversale en T.

11. Récipient à vide pour mesurer selon la revendication 4, **caractérisé en ce qu'**au passage de boîtier (31) appartient un dispositif de serrage (41), à l'aide duquel l'adaptateur (35) est susceptible d'être serré contre la bride (32).

12. Récipient à vide pour mesurer selon la revendication 1, **caractérisé en ce qu'**à l'adaptateur extérieur (54) appartient un manchon (58), assuré, de façon indéplaçable axialement, sur une extrémité d'une conduite d'amenée (2), passant à travers le passage de boîtier (31), de l'échantillon et portant un joint d'étanchéité (62), pour assurer une étanchéité par rapport à la conduite d'étanchéité (2).

13. Récipient à vide pour mesurer selon la revendication 12, **caractérisé en ce que** le manchon (58) est un manchon vissé.

14. Récipient à vide pour mesurer selon la revendication 12, **caractérisé en ce que** le manchon (58) présente, dans la paroi de son perçage traversant, une gorge annulaire (61), pour recevoir un élément d'étanchéité (62).

15. Récipient à vide pour mesurer selon la revendication 12, **caractérisé en ce que** le manchon (58) porte une bride radiale (59).

16. Récipient à vide pour mesurer selon la revendication 12, **caractérisé en ce qu'**à l'adaptateur extérieur (54) appartient une pièce de couplage (63), présentant un perçage traversant échelonné, servant de canal de passage (64) et recevant le manchon (58).

17. Récipient à vide pour mesurer selon la revendication 16, **caractérisé en ce qu'**un élément d'étanchéité (66), coopérant avec la face extérieure de la conduite d'amenée (2), est disposé dans le perçage traversant.

18. Récipient à vide pour mesurer selon la revendication 16, **caractérisé en ce que** la pièce de couplage (63) est munie d'une bride radiale (67), et **en ce qu'**une bague d'étanchéité (68) est disposée entrée la bride radiale (67) de la pièce de couplage (63) et la bride radiale (59) du manchon (58).
